# EUROPEAN PATENT SPECIFICATION

(11) **EP 2 661 672 B1**
(45) Date of publication and mention of the grant of the patent: **18.11.2020**
(21) Application number: 11794367.0
(22) Date of filing: 01.12.2011
(51) Int. Cl.: G06F 3/048, H04M 1/725, G06F 3/0488

(54) **ELECTRONIC DEVICE AND METHOD OF DISPLAYING INFORMATION IN RESPONSE TO A GESTURE**
ELEKTRONISCHE VORRICHTUNG UND VERFAHREN ZUR ANZEIGE VON INFORMATIONEN IM ANSPRECHEN AUF EINE GESTE
DISPOSITIF ÉLECTRONIQUE ET PROCÉDÉ D'AFFICHAGE D'INFORMATIONS EN RÉPONSE À UN GESTE

(30) Priority: 06.01.2011 EP 11150335; 28.02.2011 EP 11156282
(43) Date of publication of application: 13.11.2013
(73) Proprietor: BlackBerry Limited, Waterloo, ON N2K 0A7 (CA)
(72) Inventor: LAZARIDIS, Mihal, Waterloo, Ontario N2L 3W8 (CA); RYDENHAG, Tobias, SE-211 40 Malmö (SE); LINDSAY, Donald, James, Waterloo, Ontario N2L 3W8 (CA); HAMILTON, Alistair, Robert, Waterloo, Ontario N2L 3W8 (CA); LESSING, Simon, SE-211 40 Malmö (SE); GRIFFIN, Jason, Tyler, Waterloo, Ontario N2L 3W8 (CA); BENEDEK, Joseph, Eytan, Mississauga, Ontario L4W 0B5 (CA); WOOD, Todd, Andrew, Waterloo, Ontario N2L 3W8 (CA)
(74) Representative: Hanna Moore + Curley
(86) International application number: PCT/US2011/062892
(87) International publication number: WO 2012/128795

(56) References cited:
- EP-A1- 2 015 176
- EP-A1- 2 045 700
- EP-A1- 2 068 236
- WO-A2-2010/040670
- WO-A2-2012/097385
- US-A1- 2007 220 444
- US-A1- 2007 236 468
- US-A1- 2009 094 562
- US-A1- 2009 278 806
- US-A1- 2010 079 392
- US-A1- 2010 079 392
- US-A1- 2010 095 240
- US-A1- 2010 175 018
- US-A1- 2010 182 248
- US-A1- 2010 185 989
- US-A1- 2010 231 533
- US-A1- 2010 302 172
- Oceanobservations: "YouTube - What if iPhone had... Cover Flow Multitasking", , 12 October 2009 (2009-10-12), XP055557651, Retrieved from the Internet: URL:http://www.youtube.com/watch?v=W9Irt_J 2c7o [retrieved on 2019-02-15]
- Jason Doucette: "Vista Thumbnails - YouTube", , 1 December 2006 (2006-12-01), XP055557707, Retrieved from the Internet: URL:https://www.youtube.com/watch?v=ydKiqG f5FHU [retrieved on 2019-02-15]

## Description

### Field of Technology

The present disclosure relates to electronic devices, including but not limited to, portable electronic devices having touch-sensitive displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart phones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

Improvements in devices with touch-sensitive displays are desirable.

The following references represent prior art relevant to the present invention.

EP 2 015 176 A1, US 2010/182248 A1 and US 2010/095240 A1 relate to touch-gesture based methods for showing image previews of different applications running simultaneously.

US 2010/185989 A1, US 2009/278806 A1, and US 2010/079392 A1 disclose the detection of touch gestures over non-display areas.

US 2009/094562 A1, and US 2010/175018 A1 show touch gestures triggering a gradual shifting between screens.

### Brief Description of the Drawings

FIG. 1 is a block diagram of an electronic device such as a portable electronic device in accordance with the disclosure.
FIG. 2 is a front view of a portable electronic device in accordance with the disclosure.
FIG. 3 through FIG. 11 illustrate examples of previewing information on a portable electronic device in accordance with the disclosure.
FIG. 12 is a flowchart illustrating a method of controlling display of information for two applications in accordance with the disclosure.
FIG. 13 through FIG. 21 illustrate examples of previewing information on a portable electronic device in accordance with the disclosure.

### Detailed Description

The present invention is defined by the independent claims. The dependent claims define further advantageous embodiments. Note that this disclosure may point to alternative aspects related to the invention which do not necessarily correspond to real realisations of it. The actual embodiments of the invention fall within the scope of the appended claims.

The following describes an apparatus for and method of controlling display of information for two applications. A gesture detected during display of information associated with a first application requests display of information associated with a second application. The information associated with the second application may be previewed without opening or launching the second application. Optionally, the application may be opened. A single continuous gesture may control the amount of the second application information that is displayed, as well as optionally opening the second application.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device or non-portable electronic device. Examples of portable electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may be a portable electronic device without wireless communication capabilities, such as handheld electronic games, digital photograph albums, digital cameras, media players, e-book readers, and so forth. Examples of non portable electronic devices include desktop computers, electronic white boards, smart boards utilized for collaboration, built-in monitors or displays in furniture or appliances, and so forth.

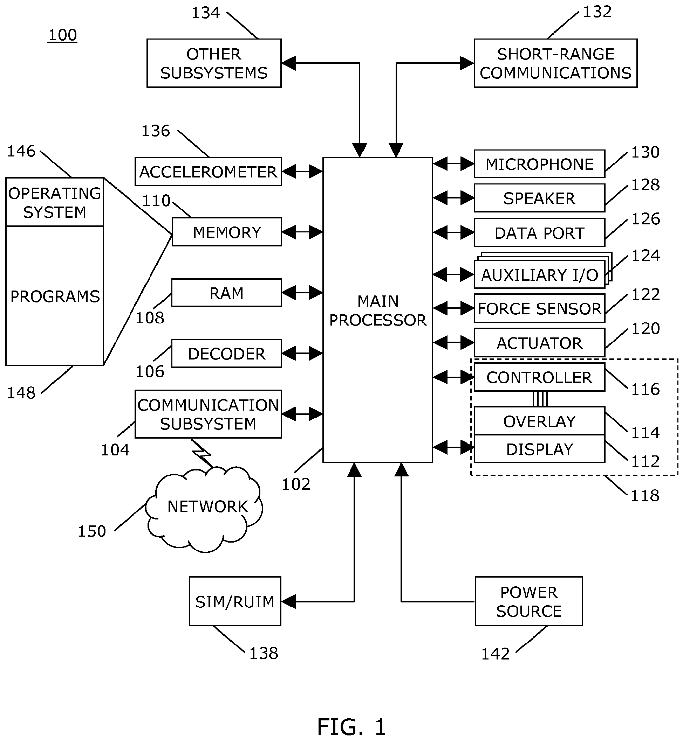

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably coupled to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. Input via a graphical user interface is provided via the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may comprise any suitable material, such as indium tin oxide (ITO).

One or more touches, also known as touch contacts or touch events, may be detected by the touch-sensitive display 118. The processor 102 may determine attributes of the touch, including a location of a touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable input member, such as a finger, thumb, appendage, or other objects, for example, a stylus, pen, or other pointer, depending on the nature of the touch-sensitive display 118. Multiple simultaneous touches may be detected.

The actuator(s) 120 may be depressed or activated by applying sufficient force to the touch-sensitive display 118 to overcome the actuation force of the actuator 120. The actuator(s) 120 may be actuated by pressing anywhere on the touch-sensitive display 118. The actuator(s) 120 may provide input to the processor 102 when actuated. Actuation of the actuator(s) 120 may result in provision of tactile feedback. When force is applied, the touch-sensitive display 118 is depressible, pivotable, and/or movable. Such a force may actuate the actuator(s) 120. The touch-sensitive display 118 may, for example, float with respect to the housing of the portable electronic device, i.e., the touch-sensitive display 118 may not be fastened to the housing. A mechanical dome switch actuator may be utilized. In this example, tactile feedback is provided when the dome collapses due to imparted force and when the dome returns to the rest position after release of the switch. Alternatively, the actuator 120 may comprise one or more piezoelectric (piezo) devices that provide tactile feedback for the touch-sensitive display 118.

Optional force sensors 122 may be disposed in conjunction with the touch-sensitive display 118 to determine or react to forces applied to the touch-sensitive display 118. The force sensor 122 may be disposed in line with a piezo actuator 120. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

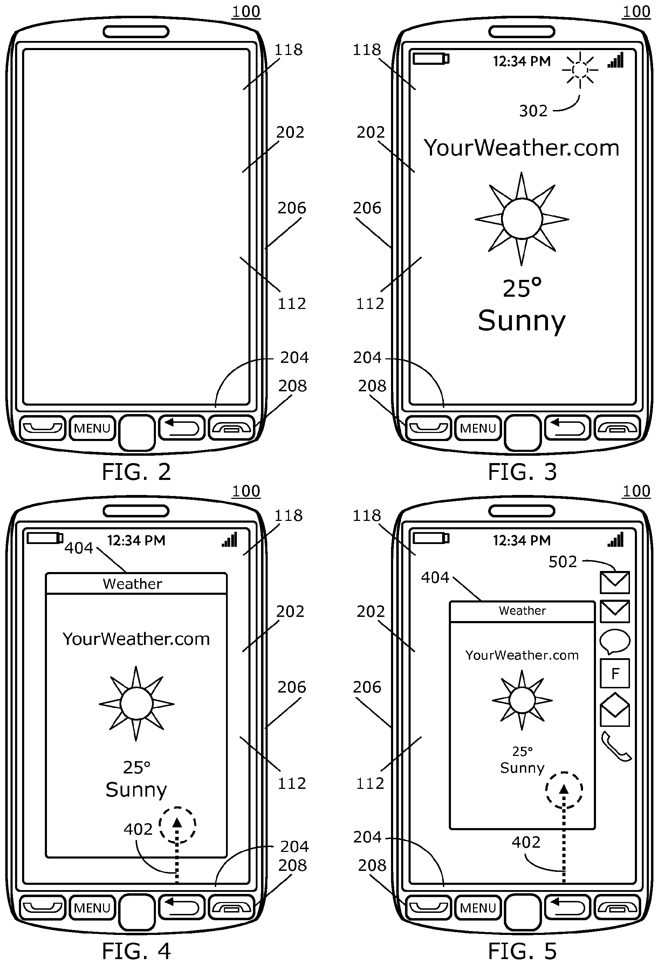

A front view of a portable electronic device is shown in FIG. 2. The touch-sensitive display 118 includes a display area 202 in which information may be displayed, and a non-display area 204 extending around the periphery of the display area. The display area 202 generally corresponds to the area of the display 112. Information is not displayed in the non-display area 204 by the display 112, which non-display area 204 is utilized to accommodate, for example, electronic traces or electrical connections, adhesives or other sealants, and/or protective coatings around the edges of the display area. The non-display area 204 may be referred to as an inactive area. The non-display area 204 is typically not part of the physical housing or frame 206 of the electronic device. Typically, no pixels of the display 112 are in the non-display area 204, thus no image can be displayed by the display 112 in the non-display area 204. Optionally, a secondary display, not part of the primary display 112, may be disposed under the non-display area 204. Touch sensors may be disposed in the non-display area 204, which touch sensors may be extended from the touch sensors in the display area or distinct or separate touch sensors from the touch sensors in the display area 202. A touch, including a gesture, may be associated with the display area 202, the non-display area 204, or both areas. The touch sensors may extend across substantially the entire non-display area 204 or may be disposed in only part of the non-display area 204. Touches may be detected, for example, starting in the non-display area 204 and continuing into the display area 202 or starting in the display area 202 and continuing into the non-display area 204, whether or not touch sensors are disposed in the non-display area 204. The portable electronic device 100 optionally includes a set of convenience keys or buttons 208, 1308 that may be separate physical keys or buttons or virtual keys or buttons.

A sequence of responses to various aspects of a gesture is shown in FIG. 3 through FIG. 10. Previewing second application information with an option to open the second application are described. The electronic device 100 is in a portrait orientation in these examples, although the examples apply to a landscape orientation as well. In this example, a weather application is displayed when a notification occurs. The notification may indicate, for example, an incoming message, such as an email or text message, a missed phone call, a meeting notice, a social networking message, and so forth. The notification may be audible and/or visual. A visual notification may be provided by a separate physical element, e.g., a light emitting diode that blinks, or a displayed notification, such as the virtual notifier 302 that appears as a blinking object on the touch-sensitive display. The notification may be provided for a predetermined period of time or until an action terminates the notification. The notification activates monitoring for a gesture that indicates a request to display information associated with a second application for which information is not currently being displayed. For example, the monitoring may target detection of a touch at specific locations of the display, such as at or near an edge or side of the display area 202.

During display of information associated with a first application, the weather application in this example, a gesture is detected. The gesture in this example has an origin associated with a lower edge of the display area 202, e.g., a swipe that starts in the non-display area 204 and continues onto the display area 202 as shown in FIG. 4. Throughout the drawings, a current location of the gesture is shown by a dotted circle, and a path of the gesture is shown by a dotted line with an arrow indicating most recent direction (if any) of the gesture. Information associated with the first application is referred to as first application information, and information associated with the second application is referred to as second application information herein. In this example, the path 402 of the gesture is indicated by the dotted line and arrow. The gesture need not be provided in response to the notification and may be detected at any time.

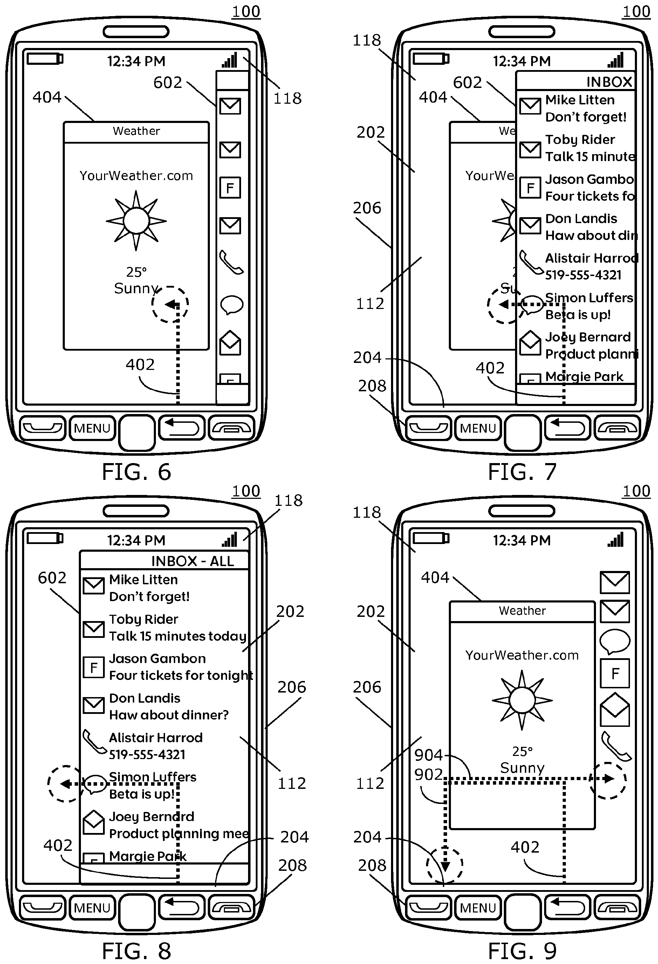

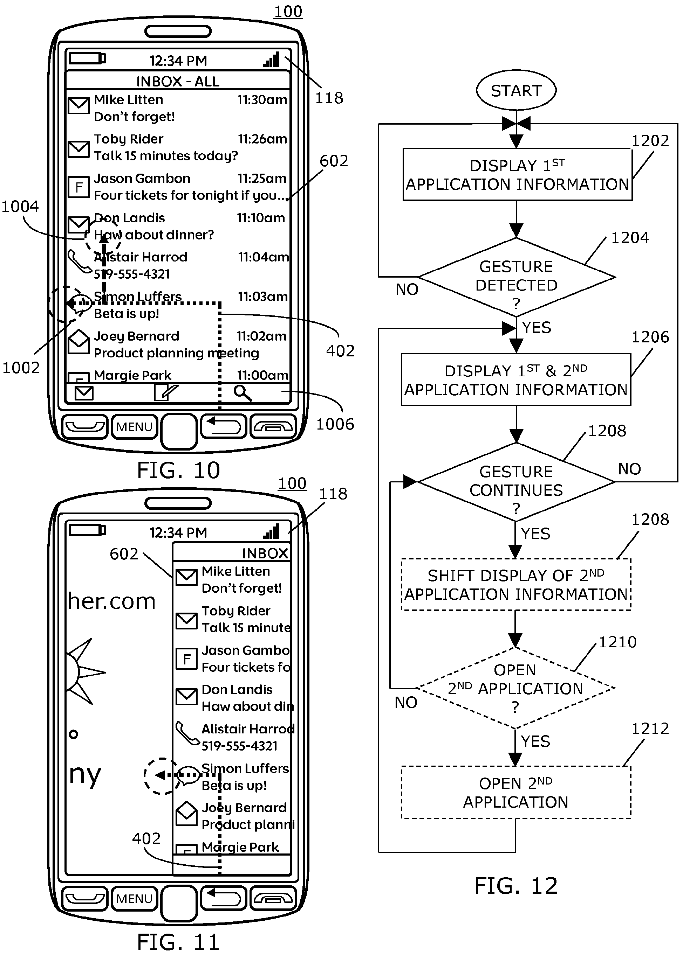

The first application information 404 may optionally be displayed in a background manner, such as in a reduced or gradually reduced size (such as shown in FIG. 4 through FIG. 9, FIG. 14 through FIG. 17, FIG. 19, and FIG. 20), in a partially or gradually transparent style, in a manner that covers or replaces the first application information with the second application information (such as shown in FIG. 7, FIG. 8, FIG. 10, and FIG. 20), in a manner that shifts or scrolls the first application information off the touch-sensitive display 118 (such as shown in FIG. 11, FIG. 15 through FIG. 17, FIG. 19, and FIG. 20) other visual representations, or any combination thereof. The gradual changes in display may optionally take place in response to movement of the gesture or display of the second application information. For example, FIG. 4 and FIG. 5 illustrate that the first application information is reduced in size more as the path 402 of the gesture extends further into the display area 202.

Optionally, additional information may be displayed with the first application information 404 when this information is displayed in a reduced size. For example, a battery level, time, date, signal strength, and one or more message notifications 502 may be displayed, such as shown in FIG. 5. The user may be satisfied with the additional information displayed, and may discontinue the gesture, thus returning the display to displaying the first application information.

As the gesture continues in the example sequence, the path 402 of the gesture changes direction in FIG. 6, which change in direction triggers the beginning of the display of the second application information 602. In this example sequence, the second application information 602 shifts or scrolls onto the touch-sensitive display 118 from a right side or edge of the display 118 relative to the orientation of the drawing. Thus, the second application information 602 shifts or scrolls onto the display 118 from a side or edge of the display 118 different from the edge associated with the gesture, e.g., where the gesture originated.

The second application information 602 is gradually shifted or scrolled onto or off (of) the display 118 as the along with the movement of the gesture. As the path 402 of the gesture moves to the left as the example proceeds from FIG. 6 to FIG. 7 to FIG. 8, more of the second application information 602 is gradually displayed. This shifting or scrolling provides a user with the ability to view a part of the second information 602 until the user has seen enough information to decide whether or not to open the second application. The second application information 602 may optionally be displayed more quickly when the gesture moves more quickly. More of the second application information 602 may optionally be displayed as length of the gesture increases, such as shown in the example in the progression of the gesture from FIG. 6 to FIG. 7 to FIG. 8. Thus, the amount of information displayed may optionally be proportional to the length of the path of the gesture or the length of a part of the path of the gesture. More of the second application information 602 may optionally be displayed the longer the gesture is maintained or detected by the touch-sensitive display. Thus, the amount of information displayed may optionally be proportional to the duration or length of time of detection of the gesture.

The user is provided with the ability to preview the second application information without opening the application and to optionally open the second application if desired. FIG. 9 illustrates a few different examples of gesture characteristics that terminate the preview of the second application information. For example, the user may have viewed enough information via preview and does not desire to view more information or open the second application. One gesture option to terminate preview includes changing the path 902 of the gesture in a direction toward the edge or side associated with the origin of the gesture, which is the bottom of the display area 202 in this example. Another gesture option to terminate preview includes changing the path 904 of the gesture in a direction toward the edge or side where the second application information began to be displayed, such as the edge where the information shifts or scrolls onto the display area 202. Another gesture option to terminate preview includes simply discontinuing the gesture, e.g., the input member is removed from the touch-sensitive display 118.

When the gesture ceases, optionally, the first application information is again displayed on the display 118, as shown in the example of FIG. 9. With this option, the first application information 404 may be displayed in a gradually increasing size, may shift or scroll back onto the display area 202, or may be immediately restored to full or normal display size, such as shown in FIG. 3.

Upon previewing the second application information 602, the user may desire to open the second application, for example, to open or send a message. The second application may be opened when the gesture includes a characteristic that indicates opening of the second application. For example, the path 402 of the gesture may continue from FIG. 8 along the optional paths 1002, 1004 shown in FIG. 10 to open the second application. The paths 1002, 1004 reflect examples of characteristics or attributes of the gesture that are interpreted by the device 100 to open the second application. One option for the gesture to open the second application is for the path 1002 of the gesture to continue in its current direction until the gesture is associated with another edge or side of the display, such as the edge or side opposite the edge or side where the display of the second application information 602 entered the display, such as shown in FIG. 10. Another option for the gesture to open the second application is for the path 1004 of the gesture to change direction, such as toward the edge or side opposite the edge or side where the display of the second application information 602 entered the display, such as shown in FIG. 10. Another option is to automatically open the second application when the second application information covers available display area in response to the gesture, for example, when the second application information is displayed across a vertical or horizontal extent of the display area 202 or a vertical or horizontal extent of a window or field in which the second application information is displayed.

Some of the examples herein show an option where the first application information is displayed in a reduced size. Another option in these examples retains the reduced-size first application information at a fixed location on the display 118 as the second application information covers or replaces the first application information on the display 118. Optionally, the first application information may be displayed without changing the size of the information, i.e., in the same size, such as shown in FIG. 11. When the first application information is displayed same-size, the first application information may be retained at a fixed location on the display 118 as the second application information covers or replaces the first application information on the display 118, or the first application information may be shifted or scrolled off the display 118 as the second application information is shifted or scrolled on the display 118, such as shown in FIG. 11. Less first application information, e.g., quantity of information or area of display covered by the information, may be displayed as more second application information is displayed.

A flowchart illustrating a method of controlling display of information for two applications is shown in FIG. 12. The method may be carried out by software executed, for example, by the processor 102 of the electronic device, which may be a portable electronic device 100. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium.

Information associated with a first application is displayed 1202 on a display, for example, on a touch-sensitive display 118. The information may be information associated with any suitable application, such as email, text messaging, calendar, tasks, address book or contacts, media player, or any other suitable application in which information is displayed by or on an electronic device 100. Information associated with email may include a list of email messages, information associated with a calendar may include a meeting schedule, calendar day view, week view, month view, or agenda view, information associated with an address book may include a listing of contacts, information associated with a media player may include text, pictures, videos, or artwork related to music or other media. The applications and information are not limited to the examples provided.

A gesture associated that indicates a request to display information associated with a second application is detected 1204. Detection of the gesture triggers display of the second application information. The gesture may be considered to be a command associated with the second application, which command requests, controls, or causes at least part of the second application information to be displayed.

An appropriate gesture is advantageously assigned to request display of information associated with a second application. Advantageously, unintentional display of information is avoided. Thus, the gesture is associated with the second application. The gesture may be associated with a specific location, such as an edge (or side) or corner of the touch-sensitive display 118, or a displayed element, such as a special indicator, e.g., a ghosted symbol or word, or a header for an application. The gesture may have detectable attributes or characteristics, such as movement, direction, change in direction, shape, duration, length, force, speed, time associated with a given location as with a hover, number of simultaneous touch locations, number of taps, use in conjunction with a physical key, button, or other input device, and so forth. The gesture may comprise depression of a touch-sensitive display 118 that actuates an actuator 120, such as described above. The gesture may comprise any combination of the above characteristics or attributes.

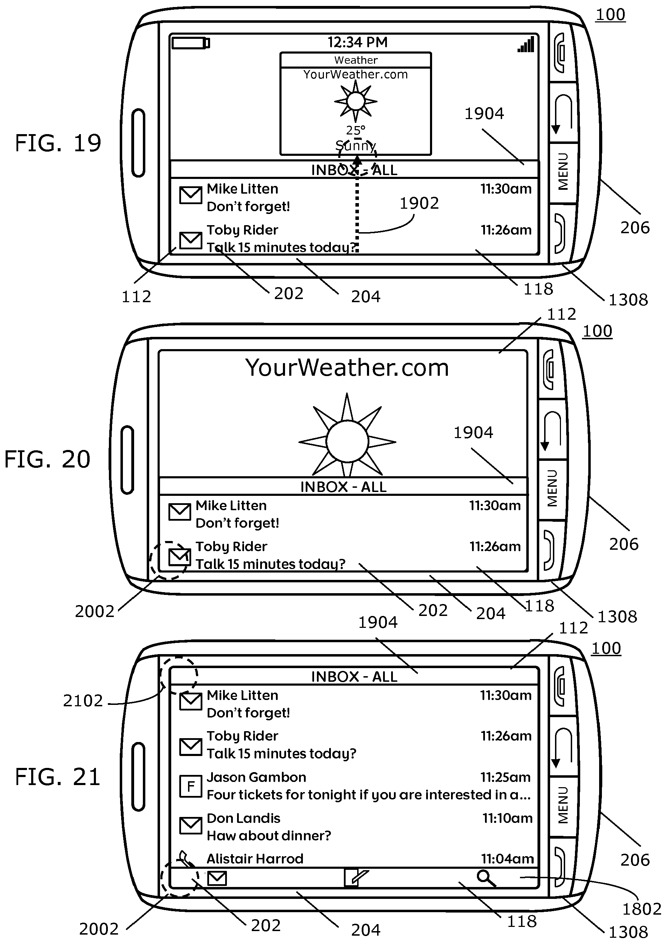

A few examples of a gesture are as follows. The gesture may be associated with an edge or side of the display area 202 and extends into or enters the display area 202. A gesture associated with an edge or side of the display area 202 may be, for example, a gesture detected by touch sensors in the non-display area 204, a gesture that starts outside the display area 202 and continues onto the display area, a gesture having a touch location (e.g., an origin of the gesture) that is at or near an outer perimeter of the display area 202, and so forth. A corner of the display area 202 may be associated with one or both edges or sides that meet at the corner. In an example not covered by the claims, the gesture may be a hover or other gesture that remains associated with a specific location for a period of time, such as the sustained touch at a location 2002 associated with a corner of the touch-sensitive display 118 as shown in the example of FIG. 20 and 21. In another example not covered by the claims, the input may be a compound gesture, for example, a touch sustained at a specific location, such as a corner or side of the display, while a swipe is detected. In accordance with the present invention, the gesture is input directly via a touch-sensitive display. In examples not covered by the claims, the gesture may be directly input via other input devices, such as an optical joystick, and so forth, and may include other types of gestures such as 3D gestures or physical gestures involving movement of the electronic device 100.

The second application may be any suitable application, such as described above. The second application information associated is also described above. For example, the second application may be a message application, and the second application information that is displayed is the inbox for the messaging application. The inbox may be a universal inbox, which may include any or all of the following, for example, emails, meeting notifications, text messages of any type, missed phone call notifications, social networking messages, system messages, news feed messages, download progress messages, subscribed information messages, and so forth. The second application may alternatively be a calendar, an address book, home screen, and so forth. The second application may alternatively be a notification application that manages notifications of various sorts, including notifications related to email, text, missed phone calls, calendar, social networking, and device warnings, such as low battery or lost communication connection, to name a few.

The first application information and second application information are displayed 1206. For example, the second application information may be displayed in increasing quantity as the first application information is displayed in decreasing quantity. The displayed second application information may be a preview (or peek) of the second application information, including, for example, a subset or part of all the available second application information. For example, when the second application is an email application, the last five emails may be displayed, when the second application is an address book, the ten most often accessed contacts may be displayed, and so forth. The preview is displayed without opening or launching the second application, in which case the previewed information may be retrieved from stored information and/or information received via a communication network 150. Previewing or displaying without opening the second application is typically a faster process than opening the information.

While previewed, second application information is viewable and active application functions are not operable other than to display more or less of the information. For the example of previewing a messaging inbox, email messages cannot be opened and new emails cannot be initiated during a preview, although the titles, senders, and time information are viewable. For the example of previewing a calendar, existing calendar events cannot be opened and new calendar events cannot be initiated during a preview, although the titles, meeting initiator, and time information are viewable. The second application may optionally be opened to engage active application functions. The preview of the second application information is displayed, for example, for the time duration of the gesture or until the second application is opened.

While the gesture continues 1208, the second application information is displayed by shifting or scrolling 1210 the information onto or off (of) the touch-sensitive display 118. The shifting occurs in accordance with movement of the gesture. For example, more information may be displayed as the gesture moves a forward direction and less information may be displayed as the gesture moves in a reverse direction. A forward direction may be, for example, the direction that the information takes as it progresses onto the display 118, and the reverse direction is the opposite direction to the forward direction. The shifting or scrolling of the second application information may continue as long as the gesture continues or until the second application is opened 1214 in response to detecting 1212 an indication to open the second application. The first application information shifts or scrolls off the display 118 as the second application information scrolls onto the display 118. Similarly, the first application information may optionally shift or scroll onto the display 118 as the second application information scrolls off the display 118. Thus, the method provides a preview of second application information without opening the second application while providing an easily executed option to open the second application.

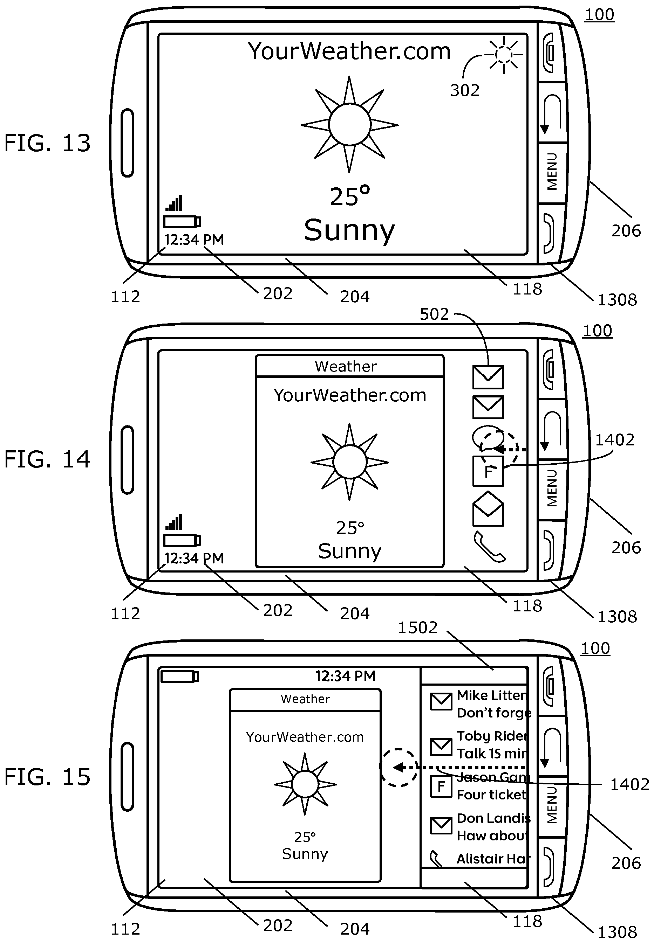

A sequence of responses to various aspects of gestures is shown in FIG. 13 through FIG. 21. Previewing second application information with an option to open the second application are described. Descriptions of features and aspects described above will not be repeated for the sake of brevity. The electronic device 100 is in a landscape orientation in these examples, although the examples apply to a portrait orientation as well. The portable electronic device 100 in FIG. 13 through FIG. 21 has a different form factor than the form factor of the portable electronic device 100 of FIG. 2 through FIG. 11. The method described herein applies any form factor.

The first application in this example is the same weather application from the above examples, although the information is displayed in a landscape orientation, as shown in FIG. 13. A notification, such as described above, may optionally be provided, such as the virtual notifier 302. The gesture that indicates a request to display information associated with a second application is detected. The gesture in this example has an origin associated with a right edge or side of the display area 202, e.g., a swipe that has a path 1402 that starts in the non-display area 204 and continues onto the display area 202 toward the left as shown in FIG. 14. The gesture need not be provided in response to the notification and may be detected at any time.

As shown in FIG. 15, the second application information 1502 shifts or scrolls onto the display 118 beginning at the right side or edge of the display 118 when the gesture is detected, which may include a slight delay. In this example, the second application information 1502 scrolls or shifts onto the display 118 from the same edge or side associated with the gesture.

As shown in the progression of path 1402 of the gesture from FIG. 15 to FIG. 16 to FIG. 17, the second application information 1502 shifts or scrolls onto or off (of) the display 118 along with or in accordance with movement of the gesture. For example, when the gesture moves to the left, the information moves proportionately to the left; when the gesture moves to the right, the information moves proportionately to the right. Similarly, when the gesture moves up or down, the information moves proportionately up or down, respectively, such as shown in the example of FIG. 19. As described above, the first application information may shrink or shift or scroll off the display 118 as the second application information shifts or scrolls onto the display 118.

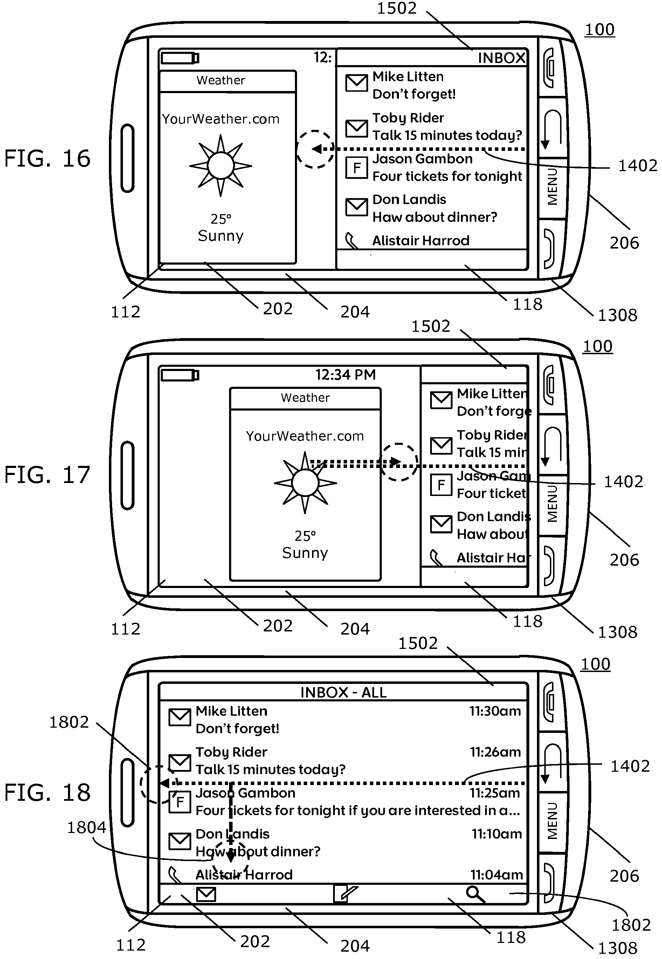

The preview or display of the second application information 1502 may end as described above, e.g., upon cessation of the gesture, when the second application information 1502 is scrolled or shifted off the display 118, and so forth. The preview terminates when the second application is opened or launched. As before, upon previewing the second application information 1502, the user may desire to open the second application, for example, to open or send a message. The second application may be opened when the gesture includes a characteristic that indicates opening of the second application. For example, the path 1402 of the gesture may continue along the optional paths 1802, 1804 shown in FIG. 18 to open the second application. The paths 1802, 1804 reflect examples of characteristics or attributes of the gesture that are interpreted by the device 100 to open the second application. One option for the gesture to open the second application is for the path 1802 of the gesture to continue in its current direction until the gesture is associated with another edge or side of the display, such as the edge or side opposite the edge or side where the display of the second application information 1502 entered the display, such as shown in FIG. 18. Another option for the gesture to open the second application is for the path 1804 of the gesture to change direction, such as toward the edge or side opposite the edge or side where the display of the second application information 602 entered the display, such as shown in FIG. 18. Another option is to automatically open the second application when the second application information covers available display area in response to the gesture, for example, when the second application information is displayed across a vertical or horizontal extent of the display area 202 or a vertical or horizontal extent of a window or field in which the second application information is displayed.

Second application information may scroll or shift onto the display 118 from a different edge or side, such as the bottom of the display area 202, such as shown in FIG. 19. In this example, the gesture is associated with the same edge from which the scrolling or shifting begins, although the gesture may originate from any edge or side or corner.

Different gesture types other than moving gestures may be utilized to preview the second application information. As shown in the example of FIG. 20 and FIG. 21, a gesture comprising a stationary touch or hover at a location 2002 associated with one of the corners of the display area 202 initiates the preview, which continues as described above. More of the second application information 1904 may optionally be displayed the longer the gesture is maintained or detected by the touch-sensitive display 118 at the location 2002. In the example of FIG. 20, the first application information is displayed same-size, and the first application information is retained at a fixed location on the display 118 as the second application information covers or replaces the first application information on the display 118. The preview may terminated, for example, when the gesture ceases to be detected or moves to a substantially different location. The second application may be opened, for example, when a second touch is detected at a location 2102 associated with a different corner, such as shown in FIG. 21.

When preview is terminated, display of the second application information may optionally be shifted off or scrolled off the display 118 along with movement of the gesture or over a period of time. The second application information may recede in the direction in which the information was displayed or may continue off the opposite edge of the display area 202 from which display began. Optionally, the display of the second application information may be immediately terminated or faded gradually off the display.

In the above examples, the gesture is a continuous gesture while displaying the at least part of the second application information without opening the second application. Although other non-continuous gestures may be utilized, a continuous gesture facilitates a more smooth display of the information as well as more quickly changing what is displayed as well as the end of the display of the second application information. The user is provided with the ability to preview as much second application information as desired without opening the second application, with the option to quickly and easily open the second application at any time with the same gesture utilized to preview the second application information. The method described herein is a natural and efficient method for previewing information with an option to open the application. Because previewing is typically faster than opening the second application, battery is conserved as well as providing a more efficient interface to the user because the user is able to obtain information without being required to open the second application.

Although the second application is opened in the above examples with a continuation of the gesture, other input may be utilized to open the second application, such as a second gesture that overlaps in time with the original gesture that indicates a preview, a menu selection, depression of a physical key, and so forth.

The second application information is displayed in the above examples starting from the right or the bottom edge or side of the touch-sensitive display 118, which has the advantage of displaying the information in a left-to-right manner or chronologically, respectively. Nevertheless, display of the second application information may start from any edge or side of the display 118.

The above examples describe displaying a first application and previewing second application information without opening the second application, with an option to open the second application in response to detecting a gesture or characteristics of the gesture. Optionally, different gestures or gestures associates with different edges or sides or corners may preview multiple different applications. For example, a gesture associated with the right edge previews a messaging inbox, a gesture associated with the left edge previews a calendar, a gesture associated with the bottom edge previews an address book, and a gesture associated with the top edge previews a user-selected application. The user may be provided with the option to assign the application with the desired edge or side or corner.

Although the method is advantageous for portable electronic devices due to the limited display size on a portable electronic device, such as a smartphone, the method may be applied to other electronic devices that have a larger display size.

Although the above examples illustrate various different features, the features of any example may be utilized with any other example unless the features conflict. For example, features of FIG. 2 through 11 may be utilized in a landscape orientation, and features of FIG. 13 through 21 may be utilized in a portrait orientation. Other features are interchangeable but are too numerous to identify briefly.

Shifting or scrolling of information onto a display area generally includes gradually moving or progressively adding information onto a display area. Shifting or scrolling of information off (of) a display area generally includes gradually moving or progressively removing information from a display area. The shifting or scrolling of second application information onto the display may cause shifting or scrolling of first application information off the display or may cover or replace the first application information, such that the first application information appears to be below the second application information. The display of the information associated with a first application may be reduced as the display of the information associated with the second application is increased. The information associated with the second application may shift onto the touch-sensitive display from a first edge of the touch-sensitive display while the information associated with the first application shifts off a second edge of the touch-sensitive display, wherein the second edge is opposite the first edge. Icons or information other than the first application information may also scroll or shift onto or off of the display as the first application information or the second application information scrolls onto or off of the display, changes size, and so forth.

The second application information that is previewed may be adjusted by the user. For example, the use may identify the quantity of information to be previewed, e.g., 10 lastest unread emails, 5 most recently accessed contacts, and so forth.

The terms left, right, top, bottom, and so forth are utilized herein for purpose of providing a perspective for reference but are not otherwise limiting.

The described embodiments are to be considered in all respects only as illustrative and not restrictive. Modifications may be made without departing from the scope of the present invention, as defined by the attached claims.

## Claims

1. A method comprising:
displaying (1202) information associated with a first application on a touch-sensitive display of an electronic device, the touch-sensitive display comprising a display area (202) and a non-display area (204) extending around the periphery of the display area;
receiving a notification associated with a second application while displaying the information associated with the first application, wherein the second application is different from the first application;
after receiving the notification, activating monitoring for a gesture on the touch-sensitive display, which gesture indicates a request to preview information associated with the second application, the gesture having an origin in the non-display area (204) and extends into or enters the display area (202); and
in response to said gesture being detected and without opening the second application, gradually displaying (1206) the information associated with the second application on the display area (202) by gradually shifting the information associated with the second application onto or off the display area (202) of the touch-sensitive display, wherein the gradual shifting occurs in accordance with movement of the gesture, and wherein the information associated with the second application shifts onto the touch-sensitive display from a first edge of the display area (202) of the touch-sensitive display while the information associated with the first application shifts off a second edge of the display area (202) of the touch-sensitive display, wherein the second edge is opposite the first edge.

2. An electronic device (100) comprising:
a touch-sensitive display comprising a display area (202) and a non-display area (204) extending around the periphery of the display area;
a processor (102) configured to:
display information associated with a first application on the touch-sensitive display of the electronic device;
receive a notification associated with a second application while displaying the information associated with the first application, wherein the second application is different from the first application;
activate , after receiving the notification, monitoring for a gesture on the touch-sensitive display, which gesture indicates a request to preview information associated with the second application, the gesture having an origin in the non-display area (204) and extends into or enters the display area (202); and
in response to said gesture being detected and without opening the second application, gradually display the information associated with the second application on the display area (202) by gradually shifting the information associated with the second application onto or off the display area (202) of the touch-sensitive display, wherein the gradual shifting occurs in accordance with movement of the gesture, and wherein the information associated with the second application shifts onto the touch-sensitive display from a first edge of the display area (202) of the touch-sensitive display while the information associated with the first application shifts off a second edge of the display area (202) of the touch-sensitive display, wherein the second edge is opposite the first edge.

3. The method of claim 1 or the electronic device of claim 2, wherein the information associated with the second application is displayed for a duration of the gesture.

4. The method of claim 1 or the electronic device of claim 2, wherein the amount of the gradually displayed information associated with the second application increases the longer the gesture is detected by the touch-sensitive display.

5. The method of claim 1 or the electronic device of claim 2, wherein the display of the information associated with a first application is reduced as the display of the information associated with the second application is increased.

6. The method of claim 1 or the electronic device of claim 2, wherein gradually displaying the information associated with the second application is temporary displaying until the gesture terminates or when the second application is opened.

7. The method of claim 1 or the electronic device of claim 2, wherein upon cessation of the gesture, the information associated with the first application is redisplayed on the display, and display of the information associated with the second application is discontinued.

8. The method of claim 1 or the electronic device of claim 2, wherein the gesture is associated with an edge of the touch-sensitive display.

9. The method of claim 1 or the electronic device of claim 2, wherein the second application is a messaging application and an inbox for the messaging application is displayed.

10. The method of claim 1 or the electronic device of claim 2, further comprising detecting an indication to open the second application and opening the second application in response to detecting the indication.

11. A non-transitory computer-readable medium having computer-readable code executable by at least one processor of a portable electronic device to perform the method of claim 1.

## Patentansprüche

1. Verfahren, das Folgendes umfasst:
Anzeigen (1202) von Informationen, die einer ersten Anwendung auf einer berührungsempfindlichen Anzeige einer elektronischen Vorrichtung zugehörig sind, wobei die berührungsempfindliche Anzeige einen Anzeigebereich (202) und einen Nichtanzeigebereich (204) umfasst, die sich um den Umfang des Anzeigebereichs herum erstrecken;
Empfangen einer Benachrichtigung, die einer zweiten Anwendung zugehörig ist, während die Informationen angezeigt werden, die der ersten Anwendung zugehörig sind, wobei sich die zweite Anwendung von der ersten Anwendung unterscheidet;
nach dem Empfangen der Benachrichtigung, Aktivieren des Überwachens für eine Geste auf der berührungsempfindlichen Anzeige, wobei diese Geste eine Anforderung angibt, um Informationen vorzuschauen, die der zweiten Anwendung zugehörig sind, wobei die Geste einen Ursprung in dem Nichtanzeigebereich (204) aufweist und sich in den Anzeigebereich (202) hinein erstreckt oder in diesen eintritt; und
als Reaktion darauf, dass die Geste erfasst wird und ohne die zweite Anwendung zu öffnen, schrittweises Anzeigen (1206) der Informationen, die der zweiten Anwendung auf dem Anzeigebereich (202) zugehörig sind, durch schrittweises Verschieben der Informationen, die der zweiten Anwendung zugehörig sind, auf den Anzeigebereich (202) der berührungsempfindlichen Anzeige oder von diesem weg, wobei das schrittweises Verschieben gemäß der Bewegung der Geste erfolgt, und wobei die Informationen, die der zweiten Anwendung zugehörig sind, von einer ersten Kante des Anzeigebereichs (202) der berührungsempfindlichen Anzeige auf die berührungsempfindliche Anzeige verschoben werden, während die Informationen, die der ersten Anwendung zugehörig sind, von einer zweiten Kante des Anzeigebereichs (202) der berührungsempfindlichen Anzeige weg verschoben werden, wobei die zweite Kante der ersten Kante gegenüberliegt.

2. Elektronische Vorrichtung (100), die Folgendes umfasst:
eine berührungsempfindliche Anzeige, die einen Anzeigebereich (202) und einen Nichtanzeigebereich (204) umfasst, die sich um den Umfang des Anzeigebereichs herum erstrecken;
einen Prozessor (102), der für Folgendes konfiguriert ist:
Anzeigen von Informationen, die einer ersten Anwendung zugehörig sind, auf der berührungsempfindlichen Anzeige der elektronischen Vorrichtung;
Empfangen einer Benachrichtigung, die einer zweiten Anwendung zugehörig ist, während die Informationen, die der ersten Anwendung zugehörig sind, angezeigt werden, wobei sich die zweite Anwendung von der ersten Anwendung unterscheidet;
Aktivieren, nach dem Empfangen der Benachrichtigung, des Überwachens auf eine Geste auf der berührungsempfindlichen Anzeige, wobei die Geste eine Anforderung angibt, um Informationen vorzuschauen, die der zweiten Anwendung zugehörig sind, wobei die Geste einen Ursprung in dem Nichtanzeigebereich (204) aufweist und sich in den Anzeigebereich (202) erstreckt oder in diesen eintritt; und
als Reaktion darauf, dass die Geste erfasst wird, und ohne die zweite Anwendung zu öffnen, schrittweises Anzeigen der Informationen, die der zweiten Anwendung auf dem Anzeigebereich (202) zugehörig sind, durch schrittweises Verschieben der Informationen, die der zweiten Anwendung zugehörig sind, auf den Anzeigebereich (202) der berührungsempfindlichen Anzeige oder von diesem weg, wobei das schrittweises Verschieben gemäß der Bewegung der Geste erfolgt, und wobei die Informationen, die der zweiten Anwendung zugehörig sind, von einer ersten Kante des Anzeigebereichs (202) der berührungsempfindlichen Anzeige auf die berührungsempfindliche Anzeige verschoben werden, während die Informationen, die der ersten Anwendung zugehörig sind, von einer zweiten Kante des Anzeigebereichs (202) der berührungsempfindlichen Anzeige weg verschoben werden, wobei die zweite Kante der ersten Kante gegenüberliegt.

3. Verfahren nach Anspruch 1 oder elektronische Vorrichtung nach Anspruch 2, wobei die Informationen, die der zweiten Anwendung zugehörig sind, für eine Dauer der Geste angezeigt werden.

4. Verfahren nach Anspruch 1 oder elektronische Vorrichtung nach Anspruch 2, wobei die Menge der schrittweise angezeigten Informationen, die der zweiten Anwendung zugehörig sind, zunimmt, je länger die Geste durch die berührungsempfindliche Anzeige erfasst wird.

5. Verfahren nach Anspruch 1 oder elektronische Vorrichtung nach Anspruch 2, wobei die Anzeige der Informationen, die einer ersten Anwendung zugehörig sind, verringert wird, wenn die Anzeige der der Informationen, die der zweiten Anwendung zugehörig sind, erhöht wird.

6. Verfahren nach Anspruch 1 oder elektronische Vorrichtung nach Anspruch 2, wobei das schrittweise Anzeigen der Informationen, die der zweiten Anwendung zugehörig sind, ein vorübergehendes Anzeigen ist, bis die Geste endet oder wenn die zweite Anwendung geöffnet wird.

7. Verfahren nach Anspruch 1 oder elektronische Vorrichtung nach Anspruch 2, wobei bei Beendigung der Geste die Informationen, die der ersten Anwendung zugehörig sind, auf der Anzeige erneut angezeigt werden und die Anzeige der Informationen, die der zweiten Anwendung zugehörig sind, unterbrochen wird.

8. Verfahren nach Anspruch 1 oder elektronische Vorrichtung nach Anspruch 2, wobei die Geste einer Kante der berührungsempfindlichen Anzeige zugehörig ist.

9. Verfahren nach Anspruch 1 oder elektronische Vorrichtung nach Anspruch 2, wobei die zweite Anwendung eine Nachrichtenanwendung ist und ein Posteingang für die Nachrichtenanwendung angezeigt wird.

10. Verfahren nach Anspruch 1 oder elektronische Vorrichtung nach Anspruch 2, das ferner das Erfassen einer Angabe, um die zweite Anwendung zu öffnen, und das Öffnen der zweiten Anwendung als Reaktion auf das Erfassen der Angabe umfasst.

11. Nicht flüchtiges computerlesbares Medium, das einen computerlesbaren Code aufweist, der durch wenigstens einen Prozessor einer tragbaren elektronischen Vorrichtung ausführbar ist, um das Verfahren nach Anspruch 1 durchzuführen.

## Revendications

1. Procédé comprenant :
l'affichage (1202) d'informations associées à une première application sur un écran tactile d'un dispositif électronique, l'écran tactile comprenant une zone d'affichage (202) et une zone de non-affichage (204) s'étendant autour de la périphérie de la zone d'affichage ;
la réception d'une notification associée à une seconde application tout en affichant les informations associées à la première application, la seconde application étant différente de la première application ;
après réception de la notification, l'activation de la surveillance d'un geste sur l'écran tactile, ledit geste indiquant une demande de prévisualisation des informations associées à la seconde application, le geste ayant une origine dans la zone de non-affichage (204) et s'étendant dans la zone d'affichage (202) ou entrant dans la zone d'affichage (202) ; et
en réponse à la détection dudit geste et sans ouvrir la seconde application, l'affichage progressif (1206) des informations associées à la seconde application sur la zone d'affichage (202) en décalant progressivement les informations associées à la seconde application sur ou hors de la zone d'affichage (202) de l'écran tactile, le décalage progressif se produisant conformément au mouvement du geste, et les informations associées à la seconde application se décalant sur l'écran tactile à partir d'un premier bord de la zone d'affichage (202) de l'écran tactile tandis que les informations associées à la première application se décalent sur un second bord de la zone d'affichage (202) de l'écran tactile, le second bord étant opposé au premier bord.

2. Dispositif électronique (100) comprenant :
un écran tactile comprenant une zone d'affichage (202) et une zone de non-affichage (204) s'étendant autour de la périphérie de la zone d'affichage ;
un processeur (102) configuré pour :
afficher des informations associées à une première application sur l'écran tactile du dispositif électronique ;
recevoir une notification associée à une seconde application tout en affichant les informations associées à la première application, la seconde application étant différente de la première application ;
activer, après réception de la notification, la surveillance d'un geste sur l'écran tactile, ledit geste indiquant une demande de prévisualisation des informations associées à la seconde application, le geste ayant une origine dans la zone de non-affichage (204) et s'étendant dans la zone d'affichage (202) ou y entrant ; et
en réponse à la détection dudit geste et sans ouvrir la seconde application, afficher progressivement les informations associées à la seconde application sur la zone d'affichage (202) en décalant progressivement les informations associées à la seconde application sur ou hors de la zone d'affichage (202) de l'écran tactile, le décalage progressif se produisant conformément au mouvement du geste, et les informations associées à la seconde application se décalant sur l'écran tactile à partir d'un premier bord de la zone d'affichage (202) de l'écran tactile tandis que les informations associées à la première application se décalent sur un second bord de la zone d'affichage (202) de l'écran tactile, le second bord étant opposé au premier bord.

3. Procédé selon la revendication 1 ou dispositif électronique selon la revendication 2, dans lequel les informations associées à la seconde application sont affichées pendant une durée du geste.

4. Procédé selon la revendication 1 ou dispositif électronique selon la revendication 2, dans lequel la quantité des informations affichées progressivement associées à la seconde application augmente à mesure que le geste est détecté par l'écran tactile.

5. Procédé selon la revendication 1 ou dispositif électronique selon la revendication 2, dans lequel l'affichage des informations associées à une première application est réduit lorsque l'affichage des informations associées à la seconde application est augmenté.

6. Procédé selon la revendication 1 ou dispositif électronique selon la revendication 2, dans lequel l'affichage progressif des informations associées à la seconde application est un affichage temporaire jusqu'à ce que le geste se termine ou lorsque la seconde application est ouverte.

7. Procédé selon la revendication 1 ou dispositif électronique selon la revendication 2, dans lequel lors de la cessation du geste, les informations associées à la première application sont à nouveau affichées sur l'écran, et l'affichage des informations associées à la seconde application est interrompu.

8. Procédé selon la revendication 1 ou dispositif électronique selon la revendication 2, dans lequel le geste est associé à un bord de l'écran tactile.

9. Procédé selon la revendication 1 ou dispositif électronique selon la revendication 2, dans lequel la seconde application est une application de messagerie et une boîte de réception pour l'application de messagerie est affichée.

10. Procédé selon la revendication 1 ou dispositif électronique selon la revendication 2, comprenant en outre la détection d'une indication pour ouvrir la seconde application et l'ouverture de la seconde application en réponse à la détection de l'indication.

11. Support lisible par ordinateur non transitoire ayant un code lisible par ordinateur exécutable par au moins un processeur d'un dispositif électronique portable pour exécuter le procédé de la revendication 1.
